(19) Europäisches Patentamt
European Patent Office
Office européen des brevets

(11) Publication number: 0 238 413 B1

(12) **EUROPEAN PATENT SPECIFICATION**

(45) Date of publication of the patent specification: **16.08.90**

(51) Int. Cl.⁵: **B27K 3/52**

(21) Application number: **87400597.8**

(22) Date of filing: **18.03.87**

(54) **A treating process for wood preservation and a wood preservative for the process.**

(30) Priority: **19.03.86 JP 63196/86**
**09.06.86 JP 133200/86**

(43) Date of publication of application:
**23.09.87 Bulletin 87/39**

(45) Publication of the grant of the patent:
**16.08.90 Bulletin 90/33**

(84) Designated Contracting States:
**BE DE FR GB**

(56) References cited:
**EP-A- 0 058 142**
**WO-A-82/03817**
**GB-A- 2 082 912**
**US-A- 4 510 074**

(73) Proprietor: **KATAYAMA CHEMICAL WORKS LTD., 2-10-15 Higashiawaji Higashiyodogawa-ku, Osaka(JP)**

(72) Inventor: **Nishimoto, Kouichi, 53, Etchuminamimachi Momoyama-Nagaoka, Fushimi-ku Kyoto(JP)**
Inventor: **Nomura, Yasuhiro, 1-5-514, Akeno-cho, Takatsuki-shi Osaka(JP)**
Inventor: **Kanada, Sadaoki, 1-3-1032, Higashioota, Ibaraki-shi Osaka(JP)**

(74) Representative: **Orès, Bernard et al, Cabinet ORES 6, Avenue de Messine, F-75008 Paris(FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



ACTORUM AG

## Description

TECHNICAL FIELD

The present invention relates to a treating process for wood preservation and a wood preservative for the process. More particularly, the invention relates to a treatment for wood preservation under vacuum/pressure process, and a wood preservative for the process.

(Herein, the term "wood preservation" is used in the meaning "to prevent wood from decay and also from wood destroying fungi and insects".)

RELATED BACKGROUND ART

For wood preservation treatment, various processes applying a wood preservative to wood are known and, in the concrete, vacuum/pressure process, dipping process, painting process, etc. are used. Among these processes, the vacuum/pressure which comprises putting wood into a tank (cylinder etc.) for wood treatment, which is made of metal (usually, iron) and capable of increasing or decreasing pressure, introducing a wood preservative liquor into the tank under vacuum/pressure from a storage/recovery tank for the wood preservative liquor, which is connected by piping with the tank for wood treatment, to dip the wood in the wood preservative liquor, increasing or decreasing pressure to make the wood preservative liquor penetrate the wood up to its inner part, and recovering the remaining wood preservative liquor into the storage/recovery tank to use the liquor again, is advantageous for industrial performance and most suitable on using an aqueous solution of a water soluble wood preservative.

Hitherto, aqueous solutions of the so-called CCA (a wood preservative comprising a chromium compound, a copper compound and an arsenic compound mixed together) have been used as a single-liquor type preservative to be introduced into the above-mentioned vacuum/pressure treatment system, in view of their preservative effects against wood decay and wood destroying fungi and insects. Treating process using such CCA preservative liquor, which cause no corrosion of the wood treatment tank made of metal, the storage/recovery tank for the preservative liquor, the connecting pipes, etc. and hardly cause precipitation of the preservative agents etc., are fit for repeated use for long hours.

On the other hand, it has been recognized recently that quaternary ammonium salts are effective as wood preservatives, and it has been proposed to perform pressure pouring using as the preservative liquor an aqueous solution of a quaternary ammonium salt (Japanese Patent Laid-open No. Sho 58-188 607).

Other documents describe wood preservative containing a quaternary ammonium salt; WO-A 82/03 817 describes for instance a wood preservative composition which contains a preservative metal, an organic nitrogen containing compound selected from amines or quaternary ammonium compounds and a compound selected from the group ammonia, ammonium salts and short chain amines; EP-A 0 058 142 refers, on the other hand, to wood treatment compositions which comprise an aqueous ammoniacal solution of copper and quaternary ammonium compounds.

Further, one of the inventors of the present invention has found that combined use of a quaternary ammonium salt with heavy metal ion supplying compounds (a copper ion supplying compound and a zinc ion supplying compound) exhibits a synergetic preservative effect against wood destroying fungi and termite, and filed a patent application concerning the invention relating to a wood treatment process using as wood preservative an aqueous solution of a quaternary ammonium salt and heavy metal ion supplying compounds (Japanese Patent Application No. Sho 59-191 079).

DISCLOSURE OF THE INVENTION

However, in the former processes using CCA, there is a problem of the toxicity of wood after vacuum/pressure treatment, for example, a problem of environmental pollution that arsenous acid gas and hexavalent chromium ash, which are deadly poisons, are scattered as the wood is burnt up. Therefore, a vacuum/pressure treatment process using a substantially non-toxic preservative liquor instead of the CCA is earnestly desired.

On the other hand, the latter process using a quaternary ammonium salt and heavy metal ion supplying compounds (a copper ion supplying compound and a zinc ion supplying compound) in combination is less toxic, compared with the former processes using the CCA. However, if the treatment tank, the preservative liquor storage/recovery tank, the piping, etc. are made of iron, problems of their corrosion or of precipitation of copper in the treatment liquor arise while the vacuum/pressure treatment of wood with an aqueous solution of the quaternary ammonium salt and the heavy metal ion supplying compounds is performed, although there is no problem if they are made of special stainless steel. When such problems arise, not only apparatus for the treatment is affected, but also stability of the active ingredients having preservative effect contained in the treatment liquor would be ill influenced. That is, the aimed satisfactory preservation treatment would be substantially impossible, and the process could not be afforded for the practical use.

The present invention has been made in order to solve the above-mentioned issues, and intends to

provide a treating process for wood preservation treatment, which is able to give wood the aimed preservative property under a single vacuum/pressure treatment, remarkably reduce the corrosive action against tanks, pipes, etc. and, at the same time, solve the problems of the toxicity and the copper precipitation, and yet enables the treatment to be repeated for long hours.

From the point of view as mentioned above, the inventors of the present invention have at first taken notice of the low toxicity of quaternary ammonium salts, and thought of, and investigated, effecting the vacuum/pressure with a single-liquor type preservative liquor comprising the low toxic quaternary ammonium salt and a copper ion supplying compound, which is a low toxic preservative (against ants) ingredient, in combination. However, it was impossible to prevent precipitation of metallic copper and rusting of tanks, pipes, etc., by mere combined use of them. It was thought of to use further an anti-corrosive ingredient in combination. However, by mere addition of a conventional anti-corrosive agent, the preservative liquor was insufficient in its stability and unable to use repeatedly (cf. Referential Example given hereinafter), and also it was impossible to prevent precipitation of metallic copper.

As a result of further earnest research and investigation on various combinations of anti-corrosive ingredients to be added to the preservative liquor, the inventors of the present invention have found the fact that, by using as anti-corrosive ingredients ammonia or a specific water soluble amine and a molybdic acid compound or a nitrite in combination with the above-mentioned preservative ingredients in a specific ratio, the treatment liquor (preservative liquor) is not spoiled but rather improved in its stability and, at the same time, precipitation of metallic copper is also prevented, and yet an excellent synergetic anti-corrosive effect is attained, and have completed the present invention.

Thus, the present invention provides a treating process for wood preservation treatment which comprises introducing an aqueous solution containing

(a) a quaternary ammonium salt having wood preservative property,
(b) a water soluble inorganic and/or organic copper salt,
(c) ammonia and/or a water soluble amine capable of forming a complex with copper ion, and
(d) a molybdic acid compound and/or a nitrite

in a weight ratio of (a):(b):(c):(d)=1:0.06-1.5:0.05-3.5:0.05-0.8 wherein, (b) is a value converted into copper ion content, (c) is a value converted into nitrogen content, and (d) is a value converted into molybdenum or nitrous acid ion content and yet the ingredient (a) in an amount of 0.25-4% by weight, into a vacuum/pressure treatment system composed of a tank for wood treatment capable of increasing or decreasing pressure, a storage/recovery tank for the aqueous solution and pipes connecting them and effecting wood preservation treatment under vacuum or pressure while preventing corrosion in the treatment system.

One of the characteristic features of the present invention resides in that the above ingredients (a) and (b) are adopted as preservative ingredient, with a view to use a low toxic single-liquor type treatment liquor. Another characteristic feature of the present invention resides in that the ingredients (c) and (d) are further combined as anti-corrosive ingredients with the ingredients (a) and (b) in a specific ratio. It is difficult to obtain a treating agent having good stability and excellent anti-corrosive property by combination of the ingredient (c) or (d) alone with the ingredients (a) and (b) or by combination of other known anti-corrosive ingredients with the ingredients (a) and (b). Therefore, the above-mentioned combination adopted according to the present invention is a specific one.

In addition, although solutions comprising the above ingredients (a), (b), (c) and (d) dissolved in an aqueous solvent are useful at the above-mentioned concentration directly as a wood preservative for vacuum/pressure treatment, those solutions having a concentration higher than the above-mentioned one are also useful as a wood preservative to be used by diluting into the prescribed concentration at the time of vacuum/pressure treatment. The solutions containing the above ingredients are remarkably improved in their stability as preparations and do not cause precipitation of copper as they are brought into contact with iron. They can be processed into preparations having a concentration higher than conventional ones, which are advantageous on transportation and conservation.

Thus, the present invention provides also a wood preservative which comprises

(a) a quaternary ammonium salt having wood preservative property,
(b) a water soluble inorganic and/or organic copper salt,
(c) ammonia and/or a water soluble amine capable of forming a complex with copper ion, and
(d) a molybdic acid compound and/or a nitrite

dissolved in an aqueous solvent, in a weight ratio of (a):(b):(c):(d) = 1:0.06-1.5:0.05-3.5:0.05-0.8 wherein, (b) is a value converted into copper ion content, (c) is a value converted into nitrogen content, and (d) is a value converted into molybdenum or nitrous acid ion content.

When a nitrite is selected as the ingredient (d), however, it is preferable to use as the amine (c) a primary or tertiary amine which does not cause nitrosation with the nitrite.

Into the treatment liquor as well as the treating agent used in the process of the present inveniton, any other additives such as defoaming agent may be added as far as they do not spoil the aimed effect.

According to the process of the present invention, the preservation treatment can be performed under one vacuum/pressure treatment without causing the problem of toxicity, by virtue of the presence of the low toxic ingredients (a) and (b). Moreover, the treatment liquor exhibits excellent stability and anticorrosive property and corrosion of the wood under vacuum/pressure treatment system is prevented, by virtue of the presence of the low toxic ingredients (c) and (d).

DESCRIPTION OF SPECIAL EMBODIMENT

As the ingredient (a) of the present invention, quaternary ammonium salts having wood preservative property which are known in the art can be used. Examples of the quarternary ammonium salts include the compounds represented by the general formula:

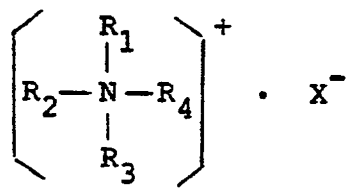

(I)

(wherein, $R_1$ denotes an alkyl group having 8 - 18 carbon atoms, $R_2$ denotes a lower alkyl group, an alkyl group having 8 - 18 carbon atoms or a benzyl group, $R_3$ and $R_4$ each denote a lower alkyl group, and X denotes a halogen atoms). More specifically, $C_8$ - $C_{18}$ alkyltrimethylammonium halides such as octyltrimethylammonium chloride, decyltrimethylammonium chloride, dodecyltrimethylammonium chloride, hexadecyltrimethylammonium chloride, stearyltrimethylammoium chloride, etc., di $C_8$ - $C_{18}$ alkyldimethylammonium halides such as octyldecyldimethylammonium chloride, dioctyldimethylammonium chloride, dodecyldimethylammonium chloride, octyldodecyldimethylammonium chloride, dihexadecyldimethylammonium chloride, dioctadecyldimethylammonium chloride, etc., and $C_8$ - $C_{18}$ alkylbenzyldimethylammonium halides such as dodecyldimethylbenzylammonium chloride, hexadecyldimethylbenzylammonium chloride, octadecyldimethylbenzylammonium chloride, etc., are mentioned. Needless to say, these quaternary ammonium salts may be a mixture of themselves, and a mixture having mixed alkyl groups derived from general oils and fats, such as $C_8$ - $C_{18}$ alkyltrimethylammonium chloride, $C_8$ - $C_{18}$ dialkyldimethylammonium chloride, $C_8$ - $C_{18}$ alkyldimethylbenzylammonium chloride, etc., can also be used. Among these quaternary ammonium salts, didecyldimethylammonium chloride, dodecyldimethylbenzylammonium chloride and hexadecyldimethylbenzylammonium chloride are preferably used.

As preferable examples of water soluble inorganic or organic copper salts used as the ingredient (b) in the present invention, copper sulfate (II), copper chloride (II), copper bicarbonate, copper nitrate (II), copper acetate (II), copper oxide (II) and the like are mentioned.

As the ingredient (c) used in the present invention, ammonia or a water soluble amine capable of forming a complex with copper ion, which is represented by the formula

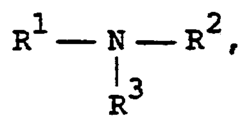

is mentioned. Here, $R^1$ denotes an organic group, or amino group, and $R^2$ and $R^3$ each denote an organic group or a hydrogen atom. Said organic group means a hydrocarbon residue such as alkyl group, alkenyl group, alkylene group, allyl group, aralkyl group, cycloalkyl group, etc., and a hydrocarbon residue substituted by amino group, alkylamin group, hydroxyl group, alkoxy group or a group containing no acidic group (such as chlorine group), including those cases wherein the organic groups are bound with each other to form a ring such as piperidine ring. For example, $C_1$ - $C_5$ alkylamines such as ethylamine, diethylamine, triethylamine, methylamine, dimethylamine, trimethylamine, isopropylamine, diisopropylamine, n-butylamine, etc., mono amines having hydroxylalkyl ($C_1$ - $C_5$) such as ethanolamine, diethanolamine, triethanolamine, isopropanolamine, etc., alkylenediamines such as ethylenediamine, propylenediamine, trimethylenediamine, etc., polyalkylenepolyamines such as diethylenetriamine, triethylenetetramine, tetraethylenepentamine, pentaethylenehexamine, etc., polyamines having hydroxyalkyl group such as aminoethylethanolamine, etc., and cyclic amines such as cyclohexylamine etc., are mentioned. From the economical point of view, it is preferable to use a $C_1$ - $C_3$ alkyl or alkyleneamine such as ethylamine, diethylamine, dimethylamine, ethylenediamine, propylenediamine, diethylenetriamine, etc., or ammonia. By the way, with any other compounds capable of forming a complex with copper ion than the above-mentioned ammonia and water soluble amines, the same effects as achieved by the present invention cannot be attained to the full.

As molybdic acid compounds used as the ingredient (d) in the present invention, sodium molybdate, molybdic acid anhydride, molybdic acid, ferrous molybdate, ammonium molybdate and the like are mentioned. Among these molybdic acid compounds, it is preferable to use sodium molybdate or ammonium molybdate, in view of the stability of the treatment liquor.

As nitrites used as the ingredient (d), alkali metal nitrites such as lithium nitrite, sodium nitrite, potassium nitrite, etc., ammonium nitrite and the like are mentioned. Among these nitrites, it is preferable to use sodium nitrite, in view of the stability of the treatment liquor.

The aqueous solution (the treatment liquor) used in the present invention is obtained by dissolving the above-mentioned ingredients in water. The solution may contain a hydrophilic organic solvent such as methanol and ethanol, if desired. The solution may also contain a known preservative against fungi or insects, such as a boron compound, an organophosphorus compound, etc., in order to increase antifungal or insecticide effect.

The ratio of the above ingredients (a), (b), (c) and (d) to be dissolved is 0.06 - 1.5 for (b), 0.05 - 3.5 for (c) and 0.05 - 0.8 for (d) per 1 of (a) by weight where, (b), (c) and (d) are values converted into amounts of copper ion content, nitrogen content and molybdenum or nitrous acid ion content, respectively, and the ratio of (a) to (b) is determined in view of the balance with antifungal effect and insecticide effect. As regard the ingredient (c), 4 or more nitrogen ions are necessary per 1 copper ion in the ingredient (b) that is, 0.05 or more nitrogen content in (c) per 0.06 copper ion content in (b) is necessary . As regards the ingredient (d), 0.05 - 0.8 molybdenum or nitrous acid ion content is necessary per 1 ingredient (a).

When nitrogen ions of the ingredient (c) are 4 or less per 1 copper ion of the ingredient (b) nitrogen content of (c) is less than 0.05 per 0.06 copper ion content of (b) or when molybdenum or nitrous acid ion content of the ingredient (d) is less than 0.05 per 1 ingredient (a), it happens that copper in the active ingredient precipitates and anti-corrosive effect is insufficient at a concentration for practical use. Further, when the ingredient (c) exceeds 3.5 or the ingredient (d) exceeds 0.8, it happens that corrosion due to iron chelation by the ingredient (c) arises or any increase in the stability of the treatment liquor and in the anti-corrosive effect, corresponding to the increase in amount of the ingredient (c) or (d), is not brought about. Thus, the preferable ratio of adding the ingredients (a), (b),(c) and (d) is (b):(c):(d) = 0.06-1.5:0.05-3.5:0.05-0.8 (weight ratio) per 1 where, (b) is a value converted into copper ion content, (c) is a value converted into nitrogen content, and (d) is a value converted into molybdenum or nitrous acid ion content .

The concentrations of these preservative ingredients in the treatment liquor may vary depending on the kind, use, and the like of the objective wood of the preservation treatment. However, it is usually suitable to adjust them so that 1 Kg or more of the ingredient (a) is impregnated into 1 $m^3$ of wood. Accordingly, it is suitable to set the amount of the ingredient (a) so that it is 0.25 - 4 weight% of the treatment liquor. Concentrations of other ingredients amount set for the ingredient (a).

Conditions and operation steps for reducing and increasing pressure of the tank for pressure pouring are the same those used conventionally.

EXAMPLES

Test Example 1: Preparation stability and corrosion controlling ability of wood preservative compositions as a treatment liquor suitable for the vacuum/pressure process

As treatment liquors suitable for the vacuum/pressure process, wood preservatives according to the present invention and wood preservatives for comparison were prepared and their preparation stability and corrosion controlling ability were tested. The results obtained are shown in Table 1 and Table 2. The meaning of each symbol used in the explanation of test method and Tables 1 and 2 is given hereinafter.

(I) Test of preparation stability

(Test method) Wood preservatives having various compositions were prepared and their preparation stability was observed just as they were prepared and after letting them to stand for one month at ordinary temperatures (10°C – 25°C).

(Meaning of each symbol in Table 1)

O ..... Preparation stability is good (liquor prepared is uniform and transparent blue)

X ..... Preparation stability is bad (copper hydroxide precipitates and turbidity and/or precipitates are formed)

(II) Confirmation test of corrosion controlling effect

(Test method) As test liquor, 10 g (Table 1) or 40 g (Table 2) of various wood preservatives prepared in (I) were collected in test tubes. Then, a commercially available iron nail (Table 1) or a test piece (50 × 30 × 1 mm) of spcc (Table 2) was, after removing grease, dipped in each test liquor to the half. After letting to

stand for one month at ordinary temperatures (10°C – 25°C), the state of corrosion of each iron nail or test piece was observed.

(Meaning of each symbol in Table 1)

(–) ..... No corrosion
+ ..... Slight partial corrosion (pitting)
++ ..... Partial corrosion (red rust precipitates)
+++ ..... Corrosion over the whole (a lot of red rust precipitates)
* ..... Copper precipitates
NT ..... Not tested

Numerical values in Table 1 show the composition ratio of each ingredient in wood preservatives having various compositions, in weight%. The numerical values given inside ( ) are values converted into weight ratio of the copper compound (as copper ion), the ammonia or water soluble amine (as nitrogen content) and the molybdic acid compound (as molybdenum) or the nitrite (as nitrous acid ion) per 1 quaternary ammonium salt.

[Consideration]

As it is apparent from the test results of preparation examples Nos. 1 - 7, wood preservatives comprising a composition of 1 quaternary ammonium salt and copper compound (as copper ion):ammonia or water soluble amine (as nitrogen content):molybdic acid compound (as molybdenum) in a weight ratio of 0.06-1.5:0.05-3.5:0.05-0.8 have a good preparation stability and exhibit a satisfactory corrosion controlling effect against metal (iron). This applies also to the preparation examples Nos. 17 - 24 using nitrite as the ingredient (d).

As it is evident from the fact that preparation example No. 2 wherein 1/3 of the amount of amine compound (as nitrogen content) in the preparation example No. 9 not exhibiting corrosion controlling effect and 1/2 of the amount of molybdic acid compound (as molybdenum) in the preparation example No. 10 not exhibiting corrosion controlling effect are used in combination, has a good preparation stability and exhibits a satisfactory corrosion controlling effect, the combination of the ingredient (c) and the ingredient (d) according to the present invention exhibits unexpectedly excellent corrosion controlling effect. This applies, for example, also to the preparation example No. 18 and the preparation examples Nos. 26 and 27 (1/5 and 1/2).

The wood preservatives represented by these preparation examples Nos. 1 - 7 and Nos. 17 - 24 can be used as a treatment liquor suited for the pressure pouring method, with or without suitable dilution.

In contrast with the above-mentioned examples, it can be understood from test examples Nos. 8 - 10, 14, 15, 25 - 27 and 31 - 33 that, when the molybdic acid compound or the nitrite and/or the water soluble amine is not combined or its combination ratio is insufficient, the resulting wood preservative liquor is turbid and the resulting preparation is unstable or, even when the preparation has a good stability, the preparation exhibits no corrosion controlling effect against metal (iron) and accordingly is not fitted for practical use in the presence of metal (iron). Further, as shown by test examples Nos. 11 - 13, 16, 28 - 30 and 34, even by combination of the amine with other known corrosion controlling ingredients or combination of the molybdic acid compound or the nitrite with other amine compounds except those used in the present invention, any corrosion controlling effect is not exhibited (the preparation examples Nos. 11, 12, 13, 28, 29 and 30) or, even when the corrosion controlling effect is exhibited, the preparation stability is not good and inconveniences such as precipitation of the active ingredient quaternary ammonium salt arise (the preparation examples Nos. 17 and 34). Thus, any good preparation cannot be found among preparations used in these test examples.

Table 1

| Classification of Examples | | Examples of the Invention | | | | | | | Comparative Examples | | |
|---|---|---|---|---|---|---|---|---|---|---|---|
| Ingredients combined | Preparation Example No. | 1 | 2 | 3 | 4 | 5 | 6 | 7 | 8 | 9 | 10 |
| (a) Quaternary Ammonium Salt | Didecyldimethylammonium Chloride (Purity 75%, IPA is contained as impurity) | 1.33w/w% (1) | 1.33w/w% (1) | 1.33w/w% (1) | 1.33w/w% (1) | 0.67w/w% (1) | 1.33w/w% (1) | 1.33w/w% (1) | 1.33w/w% (1) | 1.33w/w% (1) | 1.33w/w% (1) |
| (b) Copper Compound | Copper Sulfate ($5 \cdot H_2O$) | 1.0w/w% (0.25) | 1.0w/w% (0.25) | 1.0w/w% (0.25) | 0.5w/w% (0.13) | 2.0w/w% (1.00) | 0.25w/w% (0.06) | 1.0w/w% (0.25) | 1.0w/w% (0.25) | 1.0w/w% (0.25) | 1.0w/w% (0.25) |
| (c) Ammonia or Water soluble Amine Compound | Ammonia | 0.96w/w% (0.38) | – | – | – | – | – | – | – | – | – |
| | Ethylenediamine | – | 1.0w/w% (0.47) | – | – | – | – | – | – | 3.0w/w% (1.40) | – |
| | Diethylenetriamine | – | – | 125w/w% (0.51) | – | – | – | – | – | – | – |
| | Triethylenetetramine | – | – | – | 0.5w/w% (0.19) | 2.0w/w% (1.53) | – | – | – | – | – |
| | Monoethanolamine | – | – | – | – | – | 1.11w/w% (0.25) | – | – | – | – |
| | Aminoethylethanolamine | – | – | – | – | – | – | 1.0w/w% (0.27) | – | – | – |
| (d) Molybdic Acid Compound | Sodium Molybdate ($2 \cdot H_2O$) | 0.1w/w% (0.16) | 0.5w/w% (0.20) | 0.8w/w% | 0.5w/w% (0.20) | 1.0w/w% (0.8) | 1.0w/w% (0.40) | 1.0w/w% (0.40) | | | 1.0w/w% (0.40) |
| Water (Nonionic Surfactant 1% is contained) | | 96.31w/w% | 96.12w/w% | 95.62w/w% | 97.17w/w% | 94.83w/w% | 96.31w/w% | 95.57w/w% | 97.67w/w% | 96.67w/w% | 97.17w/w% |
| (I) Results observed of Preparation Stability Tests | | O | O | O | O | O | O | O | O | O | X |
| (II) Results observed of Corrosion Controlling Effect Confirmation Tests | | (–) | (–) | (–) | (–) | (–) | (–) | (–) | +++ * | +++ | +++ * |

Table 1 (continued)

| Classification of Examples | | Comparative Examples | | | | | |
|---|---|---|---|---|---|---|---|
| Ingredients combined | Preparation Example No. | 11 | 12 | 13 | 14 | 15 | 16 |
| (a) Quaternary Ammonium Salt | Didecyldimethylammonium Chloride (Purity 75%, IPA is contained as impurity) | 1.33w/w% (1) | 1.33w/w% (1) | 1.33w/w% (1) | 1.33w/w% (1) | 1.33w/w% (1) | 1.33w/w% (1) |
| (b) Copper Compound | Copper Sulfate (5 • $H_2O$) | 1.0w/w% (0.25) | 1.0w/w% (0.25) | 1.0w/w% (0.25) | 0.25w/w% (0.063) | 1.0w/w% (0.25) | 1.0w/w% (0.25) |
| (c) Water soluble Amine Compound | Ethylenediamine | – | – | – | – | – | – |
| | Diethylenetriamine | – | – | – | 0.12w/w% (0.049) | 0.94w/w% (0.38) | – |
| | Triethylenetetramine | 1.0w/w% (0.38) | 1.0w/w% (0.38) | 1.0w/w% (0.38) | – | – | 1.0w/w% |
| (d) Molybdic Acid Compound | Sodium Molybdate (2 • $H_2O$) | – | – | – | 1.0w/w% (0.40) | 1.0w/w% (0.04) | – |
| Anti-corrosive Agent | (1) Sodium Silicate | 2.0w/w% | – | – | – | – | – |
| | (2) Sodium Tripolyphosphate | – | 2.0w/w% | – | – | – | – |
| | (3) Phosphonic acid | – | – | 2.0w/w% | – | – | – |
| Potassium Bichromate | | – | – | – | – | – | 0.5w/w% |
| Water (Nonionic Surfactant 1% is contained) | | 94.67w/w% | 94.67w/w% | 94.67w/w% | 97.30w/w% | 96.63w/w% | 96.17w/w% |
| (I) Results observed of Preparation Stability Tests | | O | O | O | O | O | X |
| (II) Results observed of Corrosion Controlling Effect Confirmation Tests | | +++ | +++ | +++ | +++ * | +++ | NT |

Table 2

| Classification of Examples | | Examples of the Invention | | | | | | | | Comparative Examples | | |
|---|---|---|---|---|---|---|---|---|---|---|---|---|
| Ingredients combined | Preparation Example No. | 17 | 18 | 19 | 20 | 21 | 22 | 23 | 24 | 25 | 26 | 27 |
| (a) Quaternary | Didecyldimethyl-ammonium Chloride (Purity 75%, IPA is contained as impurity) | 1.33w/w% (1) | 1.33w/w% (1) | 0.66w/w% (1) | 1.33w/w% (1) | 0.67w/w% (1) | 1.33w/w% (1) | Stearyltri-methyl-ammonium chloride 0.5 (1) | Benzal-konium chloride 0.5 (1) | 1.33w/w% (1) | 1.33w/w% (1) | 1.33w/w% (1) |
| (b) Copper Compound | Copper Sulfate ($5 \cdot H_2O$) | 1.0w/w% (0.25) | 1.0w/w% (0.25) | 0.5w/w% (0.25) | 0.5w/w% (0.13) | 2.0w/w% (1.00) | 1.0w/w% (0.25) | 0.5 (0.25) | 0.5 (0.25) | 1.0w/w% (0.25) | 1.0w/w% (0.25) | 1.0w/w% (0.25) |
| (c) Ammonia or Water soluble Amine Compound | Ammonia | 0.96w/w% (0.38) | – | – | – | – | – | – | – | – | – | – |
| | Ethylenediamine | – | 0.67w/w% (0.31) | – | – | 2.0w/w% (0.93) | – | 0.3 (0.28) | 0.3 (0.28) | | 3.4w/w% (1.58) | – |
| | Diethylenetriamine | – | – | 0.625w/w% (0.51) | – | – | – | – | – | – | – | – |
| | Triethylenetetramine | – | – | – | 0.5w/w% (0.19) | – | – | – | – | – | – | – |
| | Monoethanolamine | – | – | – | – | – | – | – | – | – | – | – |
| | Aminoethyl-ethanolamine | – | – | – | – | – | 1.0w/w% (0.27) | – | – | – | – | – |
| Nitrite | Sodium Nitrite | 0.1w/w% (0.07) | 0.6w/w% (0.4) | 0.4w/w% (0.53) | 0.5w/w% (0.33) | 0.15w/w% (0.2) | 0.8w/w% (0.53) | 0.3 (0.4) | 0.25 (0.33) | | | 1.2w/w% (0.8) |
| Water (Nonionic Surfactant 1–1.5% is contained) | | 96.61w/w% | 96.4w/w% | 97.82w/w% | 97.17w/w% | 95.18w/w% | 95.87w/w% | 98.4w/w% | 98.45w/w% | 97.67w/w% | 94.27w/w% | 96.47w/w% |
| (I) Results observed of Preparation Stability Tests | | O | O | O | O | O | O | O | O | O | O | X |
| (II) Results observed of Corrosion Controlling Effect Confirmation Tests | | (–) | (–) | (–) | (–) | (–) | (–) | (–) | (–) | +++ * | +++ | +++ * |

Table 2 (continued)

| Classification of Examples | | Comparative Examples | | | | | | |
|---|---|---|---|---|---|---|---|---|
| Ingredients combined | Preparation Example No. | 28 | 29 | 30 | 31 | 32 | 33 | 34 |
| (a) Quaternary Ammonium Salt | Didecyldimethylammonium Chloride (Purity 75%, IPA is contained as impurity) | 1.33w/w% (1) | 1.33w/w% (1) | 1.33w/w% (1) | 1.33w/w% (1) | 2.66w/w% (1) | Benzalkonium chloride 0.5w/w% (1) | 1.33w/w% (1) |
| (b) Copper Compound | Copper Sulfate (5 • $H_2O$) | 1.0w/w% (0.25) | 1.0w/w% (0.25) | 1.0w/w% (0.25) | 1.0w/w% (0.25) | 0.5w/w% (0.063) | 0.5w/w% (0.25) | 1.0w/w% (0.25) |
| (c) Water soluble Amine Compound | Ethylenediamine | – | 1.0w/w% (0.43) | – | 1.0w/w% (0.47) | 0.05w/w% (0.012) | 0.3w/w% (0.28) | 1.0w/w% (0.47) |
| | Diethylenetriamine | – | – | 1.0w/w% (0.41) | – | – | – | – |
| | Triethylenetetramine | 1.0w/w% (0.38) | – | – | – | – | – | – |
| (d) Nitrite | Sodium Nitrite (2 • $H_2O$) | – | – | – | 0.05w/w% (0.033) | 2.0w/w% (0.8) | 0.025w/w% (0.033) | – |
| Anti-corrosive Agent | (1) Sodium Silicate | 2.0w/w% | – | – | – | – | – | – |
| | (2) Sodium Tripolyphosphate | – | 2.0w/w% | – | – | – | – | – |
| | (3) Phosphonic acid | – | – | 2.0w/w% | – | – | – | – |
| Potassium Bichromate | | – | – | – | – | – | – | 0.5w/w% |
| Water (Nonionic Surfactant 1–1.5% is contained) | | 94.67w/w% | 94.67w/w% | 94.67w/w% | 96.62w/w% | 94.79w/w% | 98.675w/w% | 96.17w/w% |
| (I) Results observed of Preparation Stability Tests | | O | O | O | O | O | O | X |
| (II) Results observed of Corrosion Controlling Effect Confirmation Tests | | +++ | +++ | +++ | +++ | +++ * | +++ | NT |

Test Example 2

With liquors obtained by diluting preparations of the preparation examples Nos. 35–41 given hereinafter with water into 5 times, the same tests as the test example 1 were performed except that the test period was 3 weeks. After completion of the tests, states of corrosion of iron nails, coloring of liquors, etc. were observed. No corrosion of iron nails was recognized, and the liquors were transparent blue.

(Example of high concentration preparations suited for the pressure pouring method)

Preparation Example 35

(i) Didecyldimethylammonium chloride 6,67 g
(purity 75%)
(ii) Copper sulfate 5 g
(iii) Triethylenetetramine 5 g
(iv) Sodium molybdate 5 g
(v) Nonionic surfactant 5 g
(Nonylphenol/10 mols ethyleneoxide addition product)
(vi) Water 73,33 g

By mixing, (ii), (iii) and (iv) was first dissolved in (vi) and then, in the resulting solution, (v) and (i) were dissolved in that order, whereby a uniform liquid preparation was obtained.

Preparation Example 36

(i) Didecyldimethylammonium chloride 6,67 g
(purity 75%)
(ii) Copper sulfate 5 g
(iii) Diethylenetriamine 6,5 g
(iv) Sodium molybdate 4 g
(v) Nonionic surfactant 5 g
(Nonylphenol/10 mols ethyleneoxide addition product)
(vi) Water 72.83 g

Preparation Example 37

(i) Didecyldimethylammonium chloride 6.67 g
(purity 75%)
(ii) Copper sulfate 5 g
(iii) Ethylenediamine 5.0 g
(iv) Sodium molybdate 2.5 g
(v) Nonionic surfactant 5 g
(Nonylphenol/10 mols ethyleneoxide addition product)
(vi) Water 75.83 g

Preparation Example 38

(i) Didecyldimethylammonium chloride 6.67 g
(purity 75%)
(ii) Copper sulfate 4.55 g
(iii) Diethylenetriamine 6.67 g
(iv) Sodium molybdate 7.5 g
(v) Nonionic surfactant 5 g
(Nonylphenol/10 mols ethyleneoxide addition product)
(vi) Water 69.51 g

Preparation Example 39

(i) Didecyldimethylammonium chloride 6.67 g
(purity 75%)
(ii) Copper sulfate 5 g
(iii) Aminoethanolamine 9.5g
(iv) Sodium molybdate 5 g
(v) Nonionic surfactant 5 g
(Nonylphenol/10 mols ethyleneoxide addition product)
(vi) Water 68.83 g

Preparation Example 40

(i) Didecyldimethylammonium chloride 6.77 g
(purity 75%)
(ii) Copper sulfate 5 g
(iii) Ammonia 5 g
(iv) Sodium molybdate 2.5 g
(v) Nonionic surfactant 5 g
(Nonylphenol/10 mols ethyleneoxide addition product)
(vi) Water 75.93 g

Preparation Example 41

(i) Stearyltrimethylammonium chloride 6.25 g
(purity 80%)
(ii) Copper sulfate 5 g
(iii) Triethylenetetramine 5 g
(iv) Ammonium molybdate 3.63 g
(v) Nonionic surfactant 5 g
(Nonylphenol/10 mols ethyleneoxide addition product)
(vi) Water 75.12 g

*Preparations of the preparation examples Nos. 35–41 approx. 5–10 times, on use.

Every preparation obtained had a good storage stability, not exhibiting any change even after letting them to stand for 3 months at ordinary temperatures. They were uniformly diluted even at the time of the above-mentioned dilution with water.

Test Example 3

With liquors obtained by diluting preparations of the preparation examples Nos. 42–48 given hereinafter with water into 5 times, the same tests as the test example 1 were performed except that the test period was 3 weeks. After completion of the tests, states of corrosion of iron nails, coloring of liquors, etc. were observed. No corrosion of iron nails was recognized, and the liquors were transparent blue.

(Examples of high concentration preparations suited for the pressure pouring method.)

Preparation Example 42

(i) Didecyldimethylammonium chloride 6.67 g
(purity 75%)
(ii) Copper sulfate 5 g
(iii) Triethylenetetramine 5 g
(iv) Sodium nitrite 5 g
(v) Nonionic surfactant 5 g
(Nonylphenol/10 mols ethyleneoxide addition product)
(vi) Water 73.33 g

By mixing, (ii), (iii) and (iv) were first dissolved in (vi) and then, in the resulting solution, (v) and (i) were dissolved in that order, whereby a uniform liquid preparation was obtained.

Preparation Example 43

(i) Didecyldimethylammonium chloride 6.67 g
(purity 75%)
(ii) Copper sulfate 5 g
(iii) Diethylenetriamine 6.5 g
(iv) Sodium nitrite 4 g
(v) Nonionic surfactant 5 g
(Nonylphenol/10 mols ethyleneoxide addition product)
(vi) Water 72.83 g

Preparation Example 44

(i) Didecyldimethylammonium chloride 6.67 g
(purity 75%)
(ii) Copper sulfate 5 g
(iii) Ethylenediamine 3.3 g
(iv) Sodium nitrite 3.3 g
(v) Nonionic surfactant 6 g
(Nonylphenol/10 mols ethyleneoxide addition product)
(vi) Water 75.73 g

Preparation Example 45

(i) Didecyldimethylammonium chloride 6.67 g
(purity 75%)
(ii) Copper chloride 4.55 g
(iii) Diethylenetriamine 6.67 g
(iv) Sodium nitrite 7.5 g
(v) Nonionic surfactant 7.5 g
(Nonylphenol/10 mols ethyleneoxide addition product)
(vi) Water 67.11 g

Preparation Example 46

(i) Benzalkonium chloride 6.25 g
(purity 80%)
(ii) Copper sulfate 5 g
(iii) Aminoethylethanolamine 9.5 g
(iv) Sodium nitrite 3 g
(v) Nonionic surfactant 6 g
(Nonyphenol/10 mols ethyleneoxide addition product)
(vi) Water 70.25 g

Preparation Example 47

(1) Didecyldimethylammonium chloride 6.77 g
(purity 75%)
(ii) Copper sulfate 3 g
(iii) Ammonia 4.8 g
(iv) Sodium nitrite 4.8 g
(v) Nonionic surfactant 5 g
(Nonylphenol/10 mols ethyleneoxide addition product)
(vi) Water 75.93 g

Preparation Example 48

(i) Stearyltrimethylammonium chloride 6.25 g
(purity 80%)
(ii) Copper sulfate 5 g
(iii) Ethylenediamine 3.3 g
(iv) Ammonium nitrite 3.63 g
(v) Nonionic surfactant 5 g
(Nonylphenol/10 mols ethyleneoxide addition product)
(vi) Water 76.82 g
*Preparations of the preparation examples Nos. 42–48 were diluted into approx. 5–10 times, on use.

Every preparation obtained had a good storage stability, not exhibiting any change even after letting them to stand for 3 months at ordinary temperatures. They were uniformly diluted even at the time of the above-mentioned dilution with water.

EFFECTS OF THE INVENTION

According to the process for wood preservation and the wood preservatives of the present invention, a good preservative property is provided to wood under the single vacuum/pressure process and, moreover, problems of the stability of active ingredients in treatment liquors and the corrosion of vacuum/pressure pouring system are remarkably improved. Further, problems in environmental pollution are improved and no damage arises on workers, since every ingredients used are low toxic. Furthermore, as it is evident from the above-described preparation stability test, the treatment liquors which are excellent in the stability and prevented from precipitation of copper ion, are suited for repeated use for long hours. Thus, the process for preservation and the wood preservatives of the present invention are excellent and useful in every aspects such as treating operation, efficiency, etc.

## Claims

1. A wood preservative which comprises
(a) a quaternary ammonium salt having wood preservative property,
(b) a water soluble inorganic and/or organic copper salt,

(c) ammonia and/or a water soluble amine capable of forming a complex with copper ion, and
(d) a molybdic acid compound and/or a nitrite
dissolved in an aqueous solvent, in a weight ratio of (a):(b):(c):(d) = 1:0.06-1.5:0.05-3.5:0.05-0.8 wherein, (b) is a value converted into copper ion content, (c)is a value converted into nitrogen content, and (d) is a value converted into molybdenum or nitrous acid ion content.

2. The wood preservative of claim 1 in which the quaternary ammonium salt (a) is represented by the general formula (I):

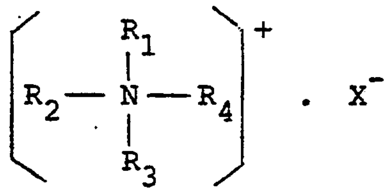

(I)

(wherein, $R_1$ denotes an alkyl group having 8 - 18 carbon atoms, $R_2$ denotes a lower alkyl group, an alkyl group having 8 - 18 carbon atoms or a benzyl group, $R_3$ and $R_4$ each denote a lower alkyl group, and X denotes a halogen atom).

3. The wood preservative of claim 2 in which the quaternary ammonium salt (a) is dodecyldimethylammonium chloride, dodecyldimethylbenzylammonium chloride or hexadecyldimethylbenzylammonium chloride.

4. The wood preservative of claim 1 in which the water soluble copper salt (b) is copper sulfate (II), copper chloride (II), copper bicarbonate, copper nitrate (II), copper acetate (II) or copper oxide (II).

5. The wood preservative of claim 1 in which the water soluble amine is $C_1$ - $C_5$ alkylamine, mono amine having hydroxyalkyl ($C_1$ - $C_5$) group, alkylenediamine, polyalkylenepolyamine, polyamine having hydroxyalkyl group or cyclic amines.

6. The wood preservative of claim 1 in which the molybdic acid compound is sodium molybdate, molybdic acid anhydride, molybdic acid, ferrous molybdate or ammonium molybdate.

7. A treating process for wood preservation which comprises introducing an aqueous solution containing
(a) a quaternary ammonium salt having wood preservative property,
(b) a water soluble inorganic and/or organic copper salt,
(c) ammonia and/or a water soluble amine capable of forming a complex with copper ion, and
(d) a molybdic acid compound and/or a nitrite
in a weight ratio of (a):(b):(c):(d) = 1:0.06-1.5:0.05-3.5:0.05-0.8 wherein, (b) is a value converted into copper ion content, (c) is a value converted into nitrogen content, and (d) is a value converted into molybdenum or nitrous acid ion content and yet the ingredient (a) in an amount of 0.25 - 4% by weight, into a vacuum/pressure treatment system composed of a tank for wood treatment capable of increasing or decreasing pressure, a storage/recovery tank for the aqueous solution and pipes connecting them and effecting wood treating for preservation under vacuum or pressure while preventing corrosion in the treatment system.

**Patentansprüche**

1. Holzkonservierungsmittel, dadurch gekennzeichnet, daß es
(a) ein quaternäres Ammoniumsalz mit holzkonservierender Eigenschaft,
(b) ein wasserlösliches anorganisches und/oder organisches Kupfersalz,
(c) Ammoniak und/oder ein wasserlösliches Amin, das dazu imstande ist, einen Komplex mit Kuperion zu bilden, und
(d) eine Molybdänsäureverbindung und/oder ein Nitrit,
gelöst in einem wäßrigen Lösungsmittel, in einem Gewichtsverhältnis von (a):(b):(c):(d) = 1:0,06–1,5:0,5–3,5:0,05–0,8 enthält, wobei (b) ein Wert ist, der in den Kupferionengehalt umgewandelt ist, (c) ein Wert ist, der in den Stickstoffgehalt umgewandelt ist, und (d) ein Wert ist, der in den Gehalt an Molybdän oder salpetriger Säure umgewandelt ist.

2. Holzkonservierungsmittel nach Anspruch 1, dadurch gekennzeichnet, daß das quaternäre Ammoniumsalz (a) durch die allgemeine Formel (I):

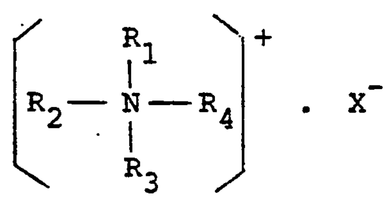

(I)

(worin $R_1$ eine Alkylgruppe mit 8 bis 18 Kohlenstoffatomen bedeutet, $R_2$ eine Niedrigalkylgruppe, eine Alkylgruppe mit 8 bis 18 Kohlenstoffatomen oder eine Benzylgruppe bedeutet, $R_3$ und $R_4$ jeweils eine Niedrigalkylgruppe bedeuten und X ein Halogenatom bedeutet) angegeben wird.

3. Holzkonservierungsmittel nach Anspruch 2, dadurch gekennzeichnet, daß das quaternäre Ammoniumsalz (a) Dodecyldimethylammoniumchlorid, Dodecyldimethylbenzylammoniumchlorid oder Hexadecyldimethylbenzylammoniumchlorid ist.

4. Holzkonservierungsmittel nach Anspruch 1, dadurch gekennzeichnet, daß das wasserlösliche Kupfersalz (b) Kupfer(II)-sulfat, Kupfer(II)-chlorid, Kupferbicarbonat, Kupfer(II-nitrat, Kupfer(II)-acetat oder Kupfer(II)-oxid ist.

5. Holzkonservierungsmittel nach Anspruch 1, dadurch gekennzeichnet, daß das wasserlösliche Amin ein $C_1$–$C_5$-Alkylamin, ein Monoamin mit einer Hydroxyalkyl-($C_1$–$C_5$)-gruppe, ein Alkylendiamin, ein Polyalkylenpolyamin, ein Polyamin mit einer Hydroxyalkylgruppe oder cyclische Amine ist.

6. Holzkonservierungsmittel nach Anspruch 1, dadurch gekennzeichnet, daß die Molybdänsäureverbindung Natriummolybdat, Molybdänsäureanhydrid, Molybdänsäure, Eisen(II)-molybdat oder Ammoniummolybdat ist.

7. Behandlungsverfahren zur Holzkonservierung, dadurch gekennzeichnet, daß man eine wäßrige Lösung, enthaltend

(a) ein quaternäres Ammoniumsalz mit holzkonservierender Eigenschaft,

(b) ein wasserlösliches anorganisches und/oder organisches Kupfersalz,

(c) Ammoniak und/oder ein wasserlösliches Amin, das dazu imstande ist, einen Komplex mit Kupferion zu bilden, und

(d) eine Molybdänsäureverbindung und/oder ein Nitrit

in einem Gewichtsverhältnis von (a):(b):(c):(d) = 1:0,06–1,5:0,05–3,5:0,05–0,8 enthält, wobei (b) ein Wert ist, der in den Kupferionengehalt umgewandelt ist, (c) ein Wert ist, der in den Stickstoffgehalt umgewandelt ist, und (d) ein Wert ist, der in den Gehalt an Molybdän oder salpetriger Säure umgewandelt ist, und wobei doch der Bestandteil (a) in einer Menge von 0,25 bis 4 Gew.-% vorliegt, in ein Vakuum-/Druckbehandlungssystem einführt, das aus einem Holzbehandlungstank, der dazu imstande ist, Druck zu verringern oder zu erhöhen, einem Lagerungs-/Wiedergewinnungstank für die wäßrige Lösung und Rohren, die die Tanks verbinden, besteht, und daß man die Holzbehandlung zur Konservierung unter Vakuum oder Druck bewirkt, wobei man Korrosion in dem Behandlungssystem verhindert.

**Revendications**

1. Préservatif du bois, caractérisé en ce qu'il comprend:

(a) un sel d'ammonium quaternaire capable de préserver le bois,

(b) un sel de cuivre soluble dans l'eau inorganique et/ou organique,

(c) de l'ammoniaque et/ou une amine soluble dans l'eau capable de former un complexe avec l'ion cuivre, et

(d) un composé d'acide molybdique et/ou un nitrite

dissous dans un solvant aqueux, selon un rapport pondéral de (a):(b):(c):(d) = 1:0,06–1,5:0,05–3,5:0,05–0,8, où (b) est une valeur convertie en teneur en ion cuivre, (c) est une valeur convertie en teneur en azote et (d) est une valeur convertie en teneur en ion acide nitreux ou molybdène.

2. Préservatif du bois suivant la revendication 1, caractérisé en ce que le sel d'ammonium quaternaire (a) est représenté par la formule générale (I):

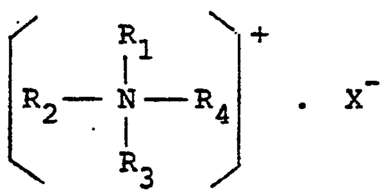

(I)

dans laquelle $R_1$ est un groupe alkyle ayant 8 à 18 atomes de carbone, $R_2$ est un groupe alkyle inférieur, un groupe alkyle ayant 8 à 18 atomes de carbone ou un groupe benzyle, $R_3$ et $R_4$ sont chacun un groupe alkyle inférieur et X représente un atome d'halogène.

3. Préservatif du bois suivant la revendication 2, caractérisé en ce que le sel d'ammonium quaternaire (a) est le chlorure de dodécyldiméthyl ammonium, le chlorure de dodécyldiméthylbenzyl ammonium ou le chlorure d'hexadécyldiméthylbenzylammonium.

4. Préservatif du bois suivant la revendication 1, caractérisé en ce que le sel de cuivre (b) soluble dans l'eau est le sulfate de cuivre(II), le chlorure de cuivre(II), le carbonate acide de cuivre, le nitrate de cuivre(II), l'acétate de cuivre(II) ou l'oxyde de cuivre(II).

5. Préservatif du bois suivant la revendication 1, caractérisé en ce que l'amine soluble dans l'eau est

une alkyl (en $C_{1-5}$) amine, une monoamine ayant un groupe hydroxyalkyle en $C_{1-5}$, une alkylènediamine, une polyalkylène-polyamine, une polyamine ayant un groupe hydroxyalkyle ou des amines cycliques.

6. Préservatif du bois suivant la revendication 1, caractérisé en ce que le composé d'acide molybdique est le molybdate de sodium, l'anhydride d'acide molybdique, l'acide molybdique, le molybdate ferreux ou le molybdate d'ammonium.

7. Procédé de traitement pour la préservation du bois, caractérisé en ce qu'il comprend l'introduction d'une solution aqueuse contenant:

(a) un sel d'ammonium quaternaire capable de préserver le bois,

(b) un sel de cuivre soluble dans l'eau inorganique et/ou organique,

(c) de l'ammoniaque et/ou une amine soluble dans l'eau capable de former un complexe avec l'ion cuivre, et

(d) un composé d'acide molybdique et/ou un nitrite

selon un rapport pondéral de (a):(b):(c):(d) = 1:0,06–1,5:0,05–3,5:0,05–0,8, où (b) est une valeur convertie en teneur en ion cuivre, (c) est une valeur convertie en teneur en azote et (d) est une valeur convertie en teneur en ion acide nitreux ou molybdène et le composant (a) étant en une quantité de 0,25 à 4% en poids, dans un système de traitement sous vide/pression composé d'une cuve pour le traitement du bois dont la pression peut être augmentée ou réduite, d'une cuve de stockage/récupération pour la solution aqueuse et de conduits les raccordant, et la réalisation ou traitement du bois pour sa préservation sous vide ou sous pression avec prévention d'une corrosion dans le système de traitement.